(19) Europäisches Patentamt
European Patent Office
Office européen des brevets

(11) **EP 1 938 327 B1**

(12) **EUROPEAN PATENT SPECIFICATION**

(45) Date of publication and mention
of the grant of the patent:
**05.09.2012 Bulletin 2012/36**

(51) Int Cl.:
*G11B 27/10* (2006.01)  *H04N 5/76* (2006.01)
*H04N 5/45* (2011.01)  *G06F 17/30* (2006.01)
*G11B 27/34* (2006.01)  *G11B 27/32* (2006.01)

(21) Application number: **06779534.4**

(22) Date of filing: **22.09.2006**

(86) International application number:
**PCT/GB2006/003537**

(87) International publication number:
**WO 2007/034206 (29.03.2007 Gazette 2007/13)**

(54) **A SEARCH TOOL**

SUCHWERKZEUG

OUTIL DE RECHERCHE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **22.09.2005 GB 0519372
25.01.2006 GB 0601530**

(43) Date of publication of application:
**02.07.2008 Bulletin 2008/27**

(60) Divisional application:
**12155518.9**

(73) Proprietor: **JFDI Engineering Ltd.
Leamington Spa
Warwickshire CV32 5AJ (GB)**

(72) Inventor: **BOWES, Jonathan, El
Warwickshire CV32 5AJ (GB)**

(74) Representative: **Wright, Howard Hugh Burnby et al
Withers & Rogers LLP
4 More London Riverside
London
SE1 2AU (GB)**

(56) References cited:
**EP-A- 0 999 504        EP-A2- 0 619 550
EP-A2- 0 929 072       EP-A2- 1 308 861
US-A1- 2001 014 203    US-A1- 2002 186 958
US-A1- 2003 067 479    US-A1- 2003 229 894
US-A1- 2004 125 124**

• **HONGJIANG ZHANG ET AL: "CONTENT-BASED
VIDEO BROWSING TOOLS" PROCEEDINGS OF
THE SPIE, SPIE, BELLINGHAM, VA, US, vol. 2417,
6 February 1995 (1995-02-06), pages 389-398,
XP000571808 ISSN: 0277-786X**

## Description

The present invention relates to a method of selecting a starting image at which to start displaying an image stream, and a system for selecting a starting image at which to start displaying an image stream. It finds particular, but not exclusive, use in the field of video recorders such as a Sky+(TM) Box, as well as DVD players and computer implemented video display systems. Often a person watching a television program or film using a personal video recorder may choose to start watching the program or film at a particular starting point other than at the beginning of the recording. When playing a DVD of, for example a sitcom series, such as "Friends", a viewer can select an episode at which to start watching the DVD. The recording on the DVD is separated into data packets, each corresponding to a different episode. The viewer is only able to play back the recording from the beginning of each data packet. This restricts the viewer to watching the DVD recording from a limited number of specific starting points.

The viewer may choose to skip adverts on a personal recording of a television broadcast or transmission. To find the end of each advert break, the viewer must fast forward the recording. He could increase the speed at which the recording is played (cue) whilst displaying an accelerated version of the recording. This is a time consuming way of searching the recording. He could fast forward through the recording at an even faster speed. This is a quicker way of moving through the recording, but the viewer cannot easily tell when he has advanced the recording to the end of the adverts without a large overshoot. Once the recording is played again, he is likely to have to cue or review to the correct point in the recording.

Sometimes data packets are spaced apart at fixed time intervals throughout the data stream of the recording. Selecting one of these data packets prevents a user readily identifying his preferred restarting point, if his chosen starting point occurs within a data packet. To select his chosen starting point, the viewer would have to fast forward or rewind the image stream from the beginning or end of a data packet.

In EP 0999504, an information processing apparatus, an information processing method, and an information providing medium allow a user to check the still pictures of a moving picture to be searched at desired points of time and desired time intervals and in a desired quantity. The user operates a mouse or a keyboard to enter a time and a time interval at which a picture is displayed. On the basis of the time and time interval, the CPU generates picture thumbnails of the moving picture. Then, the CPU simultaneously displays the generated picture thumbnails as arranged in a time sequential manner.

In US 2003067479, a method of hierarchical image indexing which extracts representative images of a TV program and generates a hierarchical index image guide of the representative images, and an apparatus therefore, is provided. Respective images at predetermined times are extracted from a predetermined program. A hierarchical index is allocated to each extracted image and the indexes are mapped to locations of transport stream packets. A tree of images having the allocated indexes is constructed as a hierarchically indexed Image guide (HIIG). When a stored program is to be reproduced, a location desired to be watched is selected in the HIIG, and from the selected location, reproducing and trick plays (FF, rewind) are enabled such that a user easily searches the program and begins viewing the program at the searched for location.

EP 0 619 550 A2 discloses a moving pictures data search function in which initially a position at which a scroll box on a scroll bar is displayed shows a relative storage position in the storage data of a currently displayed frame. It is possible to define the region to be search by selecting different parts of the scroll bar and the scroll box and then a window display region displays a predetermined number of reduced frames, these being the representative frames (divide search region in 10 portions and displaying a 3x3 mosaic of representative frames, for example). When the user respecifies the area to be searched (by selecting in the display representative frames as new start point and/or new end point) the CPU displays an image surrounding the entire representative frames to inform the re-specified area to be searched. Then the CPU divides the specified area to be searched, that is the area lying between the stored screen images corresponding to the two representative screen images selected on the display screen into 10 portions to determine representative screens images of a new second stage. The determined representative screen images are displayed on the display. After that the procedure is repeated so that reducing of the area to be searched and displacing of the representative screen images are performed.

Non patent article from HONGJIANG ZHANG ET AL: "CONTENT-BASED VIDEO BROWSING TOOLS" PROCEEDINGS OF THE SPIE. vol. 2417. pages 389-398, discloses a content-based hierarchical browser.

The aim of this invention is to reduce the aforementioned shortcomings of the prior art.

In a first aspect of the invention there is a method as defined in claim 1.

In this specification, reference is made to the "closest candidate image". When the closest candidate image is selected, this is not necessarily the candidate image that is closest in time to the starting image. It will be appreciated from this specification that, where a user selects the last of the candidate images that he recognises prior to the starting image, that last candidate image is considered closest to the starting image because the user would not be expected to recognise candidate images recurring later in the image stream. The phrase "closest candidate image" must be interpreted accordingly.

This method allows a viewer to rapidly identify the point at which he chooses to start, or restart, watching a program.

In the step of iteratively reselecting the reference image, the range of the image stream searched may be reduced in successive iterations. Advantageously, the scope of the search reduces on each successive iteration.

It is preferred that the method includes one or more iterative steps of displaying a plurality of candidate images from within a time range of the image stream close to the candidate image selected by the user in response to the previous iteration. This allows the method to select much more accurately the desired starting image.

When the candidate images are displayed, it is preferred that they are displayed in chronological order, thereby assisting the user in the operation of the method. It is more preferable for the candidate images to be arranged in the same configuration as a plurality of keys on a user controller, enabling a user to select an image by pressing an associated key. Each of the candidate images may include a corresponding number selection. In addition, to assist the user, a hard selection of a candidate image can be made which causes the image stream to be played starting from that image, or from an image extremely close to it. It is preferred that the hard selection can be made by holding a key on the keypad which corresponds to the selected candidate image for a relatively long duration, for example for more than 0.6 seconds or by pressing the key twice within a short period of time, for example within 0.5 seconds. This means that any further iteration which would normally come about is bypassed in favour of the system going straight to playing the image stream from that point. Other types of hard selection can be made. For example, the key on the key pad which corresponds to the selected candidate image could be pressed together with a shift or extension key in order to distinguish it from a normal press of that key. If the system uses on-screen selection, then some means of hard selection can be used on the screen. For example, if an on-screen pointer is used, the pointer can be moved to the desired candidate image, and a double click can be used to represent a hard selection. If a pointer is not used, but candidate images are selected using a focus which is moved from image to image on the screen, the appropriate candidate image can be highlighted using the focus, and a hard selection made, for example by double clicking on that selection. Where the screen is sensitive to being touched, touching the appropriate candidate image on the screen can be used to make a selection.

In some embodiments, it is advantageous to define the image stream from which candidate images are displayed, including a reference image at the beginning of the image stream. Displaying the candidate images may further comprise the step of displaying the time lapse of each candidate image with respect to the reference image.

The candidate images may be stationary, or a moving clip of the image stream giving moving pictures for each or some of the candidate images. The duration of each clip is preferably no more than two seconds. Where the time interval between candidate images is less than the duration of each clip, the candidate images can be stationary.

The candidate images will preferably be spaced apart by a time interval, and it is further advantageous for the time interval to reduce for each successive iteration. In each successive iteration, it is advantageous for the time interval to reduce according to a geometric progression.

In some circumstances it may be preferable if the time lapse between candidate images is adjustable. This allows the user to increase or reduce the time gap between the candidate images. Reducing the time gap may assist him in focusing in on the point at which he wishes to start the image stream. Increasing the time gap may allow the user to quickly search through a longer image stream. The time lapse between candidate images may be adjusted through the provision of a key or keys on the controller, for example the volume up and volume down keys.

Each step of displaying candidate images may include displaying the reference image as one of the candidate images. The reference image in the preferred embodiment precedes the other candidate images in the image stream. It is also preferred that the method further includes a step of displaying the starting image once a predetermined number of iterations have been executed. This may involve the counting of the number of iterations executed by the method. It may also be advantageous to analyse the time lapse between candidate images, or the duration of the image stream, and to increase or decrease the number of iterations executed by the method accordingly. For example, the number of iterations required to skip 3 or 4 minutes worth of advertisements in an image stream is likely to be less than to find a point within a 5 hour video recording. The processor operating this method may include an algorithm which determines the appropriate number of iterations to be used. Advantageously, the candidate images are spaced equidistant along the image stream.

The time interval in the first iteration can be at least 40 seconds. Advantageously, the initial time lapsed between each candidate image is longer than a user would normally want to 'cue' forward for through the image stream. Preferably the time interval on the last iteration is 0.625 seconds. As referred to above, it may be advantageous to be able to adjust the time lapse between candidate images. A preferred way of doing this is to use a key or keys on the controller to adjust the time lapse between candidate images. The keys used might include the volume up and volume down keys. Additionally, the number of iterations may be varied depending on the length of the image stream or on the time lapse in the first iteration.

There can be nine images displayed. There can be nine keys, and the keys could have a regular numeric key pad configuration, for example with the numerals 1 to 9. Advantageously the numbers on the key pad could be displayed on the display, each number with its associated image. The numbers can be arranged on the display so as to not obscure the candidate images. As referred to above, the keys can be used to make a hard selection in which the key is held down for a relatively long period of time in order to start the image stream from the candidate image corresponding to the key which is pressed.

The image stream may have an audio component. Advantageously, the method is suitable for application to audio visual programs, including, but not limited to, television programs, firms or home videos.

The image stream may comprise a series of frames. Advantageously the image stream is a recording of a television broadcast which includes, but is not limited to: television programs, a film, or a home video. In certain embodiments, this invention can be applied to a computer implemented system for displaying an image stream, such as Windows Media Player, but it can also be applied to personal video recorders, such as the Sky+(TM) box, TiVo recorder, portable video player, such as video iPod, or to DVD players or video players. In many of these systems, the image stream may originate from a broadcast, a cable television transmission, to a webstreaming Internet server or the like, and is recorded prior to play back using a suitable player. If the video stream is directed one to one from an Internet server to a user, then this search tool might operate at the webserver end, but be controlled by the user. Thus, the user, if he wishes to search for a particular point within the video stream, or if he wishes to skip a particular part of the video stream, can press a button or key which causes the system to go into a search mode whereby the user can search for a starting image in accordance with the invention. Thus, in that embodiment, the webserver will generate a set of candidate images for display on the machine of a user, which might be PC or an Internet-enabled television or the like. The user can then select the closest candidate image, and the remote webserver will then display another set of candidate images for further selection by the user. Clearly, this does not just apply to video streaming over the Internet, but can apply to other systems as well where a remote server serves video content on a one to one basis rather than multicasting it to multiple users.

In a second aspect of the invention there is a system as defined in claim 23.

Advantageously, the system allows a viewer to rapidly identify the point at which he chooses to start or restart watching a program. It is preferred that the processor is further arranged, in use, to reduce a range of the image stream searched in each successive iteration. It is further preferred that, in each iteration, the controller is arranged in use to reselect one of the candidate images displayed on the display as the reference image. In addition, the display may be arranged to display the candidate images chronological and the reference image may be arranged to precede one or more of the candidate images in the image stream.

It is preferred that the system is arranged to start running the image stream from a candidate image in response to a hard selection of that candidate image. For example, the system can be arranged such that the hard selection is achieved by holding a key of the controller for a relatively long duration. This allows a user to save time and skip further iterations if he is happy for the image stream to be shown from the candidate image which is hard selected. Additionally, the processor may be arranged to allow the time lapse between candidate images to be adjusted. In one arrangement, the controller includes one or more keys arranged to be operated by a user to adjust the time lapse between candidate images, for example the volume increase and the volume decrease keys. In the preferred embodiment, the processor is arranged to cause the display to display the time lapse for each candidate image with respect to the initial reference.

The controller may include at least two keys configured in the same arrangement as the candidate images displayed on the display, each candidate image corresponding to a key. The processor can be arranged to select the candidate images, each candidate image being spaced apart by the same time interval in the image stream, and the time interval reducing for each successive iteration and the preferred embodiment, the reference image is reselected a predetermined number of times. The processor may be arranged to control the display means to display the image stream starting from the starting image. The processor may be arranged to analyse the time lapse between candidate images or the duration of the image stream, and to increase or decrease the number of iterations executed by the method accordingly. This allows the system to be able to choose an appropriate number of iterations depending on the length of the image stream which is being searched. If a user is simply skipping 3 or 4 minutes of advertisements, then less iterations are likely to be needed than if the user is searching through a 5 hour video recording.

The system may further comprise a memory cache, the memory cache being controllable by the processor and being arranged to download a part of this image stream locally to the processor. Advantageously, the image stream required to be displayed on a display, either as a continuous image or the candidate image, is readily available on the memory cache. This avoids delay in requesting, receiving and obtaining part of the image stream for immediate display.

The system may be a personal video recorder which includes the processor and a memory. Preferably, the memory is a hard drive, or a solid state memory.

A number of further aspects of preferred features will become apparent from the appended claims.

Further features and advantages of the present invention will become apparent from the following description of embodiments thereof, presented by way of example only, and with reference to the accompanying drawings, in which:

Figure 1 is a schematic diagram representing the essential components of a preferred embodiment of a system for the invention;

Figure 2 is a schematic diagram representing a key pad of a controller for use in the invention;

Figure 3 is a schematic flow diagram representing the steps in a method embodying the invention;

Figure 4 is a schematic representation of a display having nine candidate images in a first iteration;

Figure 5 is a schematic representation of a display having nine candidate images in a second iteration;

Figure 6 is a schematic representation of a display showing nine candidate images in a third iteration;

Figure 7 is a schematic representation of a display showing nine candidate images in a first iteration, and having scrolled back the image stream by one step;

Figure 8 is a schematic representation of a display showing nine candidate images in a first iteration, and having scrolled forward the image stream one step; and

Figure 9 is a diagram showing a computer implementing a further embodiment of the invention.

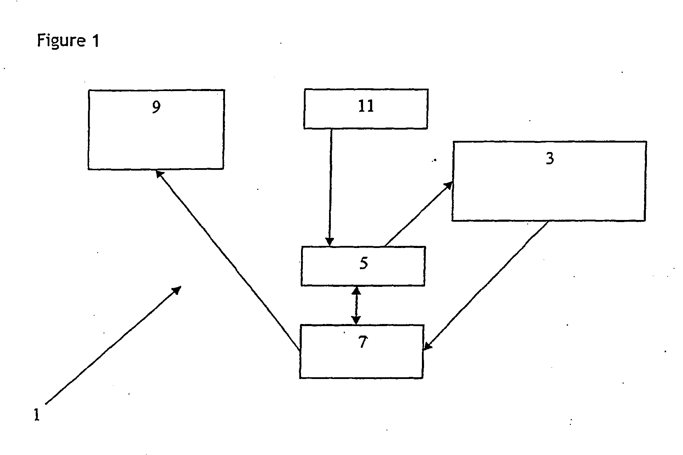

Figure 1 illustrates an example of a suitable system environment which includes a Sky+™ Box, in which the invention may be implemented. This system environment is only one example of a suitable system environment, being the preferred embodiment,

and is not intended to suggest any limitation as the scope or functionality of the invention.

The exemplary system 1 for implementing the invention shown in Figure 1 has components which include: a data store 3 for supplying an image stream; a processor 5; a memory cache 7; a visual display unit 9; and a controller 11. The processor 5 and the memory cache 7 are connected to each other and are each arranged to communicate with the data store 3. The memory cache is connected to the visual display unit 9 and the controller is arranged to communicate wirelessly, or by wired means, with the processor 5.

In use, a request is sent from the processor 5 to the data store 3. The data store 3 downloads an image stream to the memory cache 7. On receiving instructions from the processor 5 the memory cache 7 forwards the image stream to the visual display unit 9 for displaying the image stream. Consequently the memory cache 7 can download and store the image stream in advance of the display of the image stream on the visual display unit 9.

Since the controller 11 is operable to control the processor 5, the controller 11 can be used to control the image stream that is displayed on the visual display unit 9, for example to pause the image stream at a particular image, or to fast forward or rewind the display of the image stream.

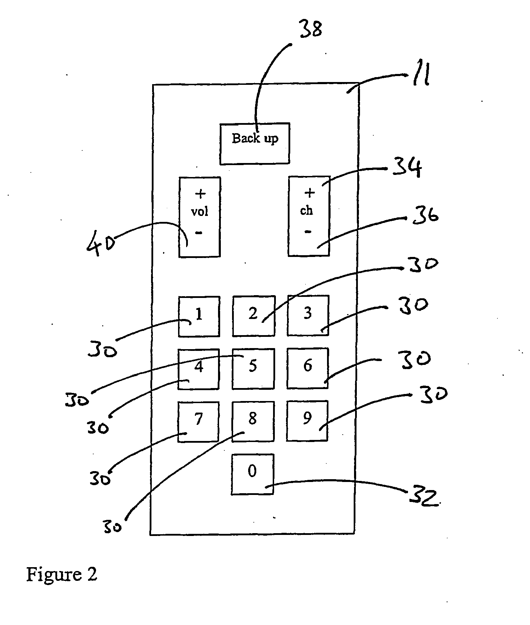

Figure 2 shows a controller 11 suitable for use in the system 1. The controller 11 has a numeric keypad for the numerals 1 to 9, (represented by label 30) and for zero, (32). It also has a channel up button 34, a channel down button, 36, a back up button 38 and a volume control button 40.

On receipt of instructions from the controller 11, the processor 5 is arranged to control the data store 3 to supply the image stream to the memory cache 7 to store the data stream and to forward parts of the stored data stream to the visual display unit 9. The processor is also arranged to receive signals from the memory cache 7. These signals include confirmations from the memory cache 7 indicating whether it is storing a particular part of the image stream.

Embodiments of the invention may be described in general context of computer-executable instructions, such as program modules, being executed by a computer. Generally, program modules include routines, programs, objects, components, data structures, and so forth, which perform particular tasks. The invention may also be practised in distributed computing environments where tasks are performed by remote processing devices that are linked through a communications network. In a distributed computing environment, program modules may be located in local and/or remote computer storage media, including memory storage devices. In this particular system, the data store can be a device remote from the rest of the system (e.g. at the head end of a cable television system), and the task of supplying the image stream is performed remotely.

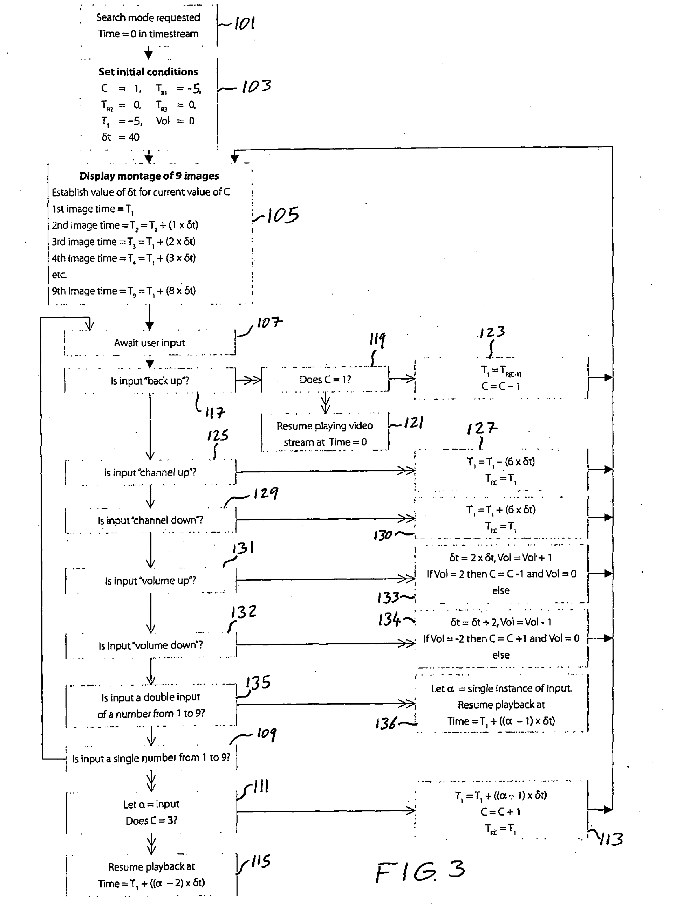

In addition to the general functions described above, the system embodying the invention is arranged to implement a method of selecting a starting point in the image stream at which to start displaying the image stream, as schematically shown in the flow diagram of Figure 3. The method allows a viewer to iteratively search for the starting image in an image stream of a recording supplied from a computer readable media, without having to fast forward or rewind the display of the image stream.

In the flow diagram, single solid arrow heads indicate movement of the process from one step to the next where there are no alternatives to that movement. A single open arrow head indicates that, of two alternative outcomes to a step, the arrow is following a negative result; and a double open arrow head indicates that the outcome of the step is a positive result.

In order to find a starting point in the image stream, it is first necessary to select or define the beginning and end of the image stream which is being searched. In some cases, this will correspond to a data packet, or to the entire recording. For example, in a DVD containing several episodes of "Friends", the data stream to be searched might be one of the episodes. Alternatively, it could be part of an episode, depending on the length of the data packets. If the DVD is a film, such as "Star Wars", the film may be divided into a number of packets, each of which could be searched independently. Alternatively, the whole film could be taken and a search carried out through the whole film. In a case where a recording has been made from a television broadcast, and it is desired to skip the advertisements which have been recorded, the video stream to be searched could be defined as a period of five minutes following the point in the program being watched when skipping is activated.

On activation of the search facility, and selection of the image stream to be searched, the viewer is presented with nine images in a three by three array on the television screen. Of course, in other embodiments, the array of images could be greater or smaller, but nine is a convenient number corresponding to the nine natural numbers of the keypad.

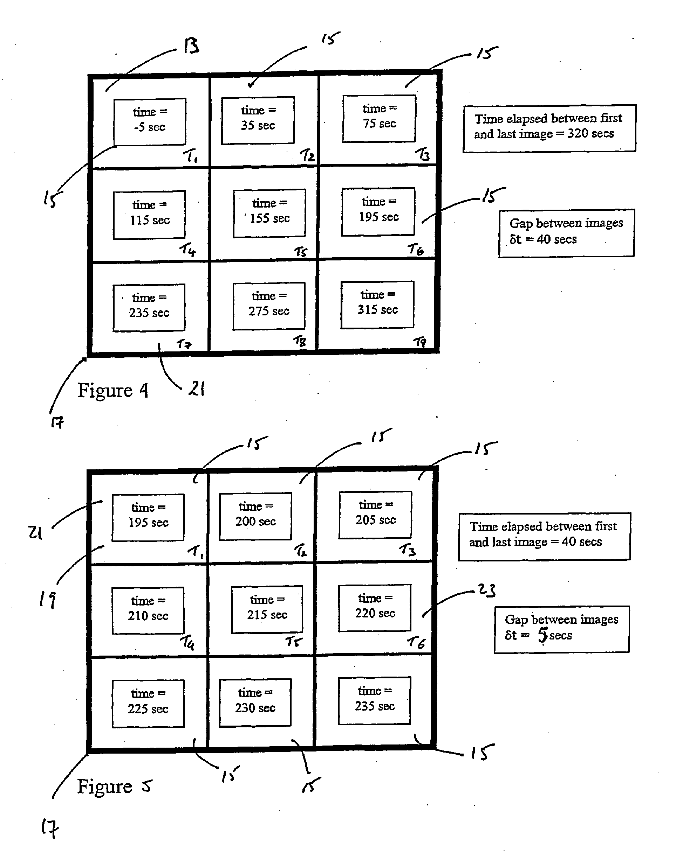

Generally speaking, each of the nine images shown in the array of images are spaced within the image stream. Thus, the first image will be at or near to the beginning of the image stream, and each of the subsequent images will be spaced evenly throughout the rest of the image stream. In the embodiments described, the image stream is effectively divided up into eight parts, and, with the exception of the ninth image, each image within the array corresponds generally to the beginning of each of those eight parts. Each of the displayed images in the array is a candidate image which can be chosen by the user by pressing the corresponding key on the key pad. In the embodiment shown in Figure 4, the nine images are spread over a period of just over five minutes. Thus, it can be used to skip the viewing of an advertisement break within a film or television program which has been recorded. To skip the break, the user simply selects the candidate image which is the first image after the advertisement break, and that immediately takes the viewer to a position quite close to the end of the advertisement break. A fresh array of nine candidate images is then displayed on the screen corresponding to the part of the image stream which was selected by the user in his first selection, in the first iteration. Thus, the fresh set of candidate images forms a second iteration of the process where again the first image not associated with the advertisement break is selected, thereby taking the viewer closer to the end of the advertisement break. By taking this action in a number of iterations, the user very quickly homes in on the starting image from which the viewing of the program or film should be recommenced. The number of iterations is likely to depend on the initial length of the image stream. The number of iterations is likely to be less for skipping an advertisement break than for searching for a point within a two hour film. The processor may include an algorithm which determines the number of iterations based on either the length of the image stream being searched through, or the duration of the time lapse in the current iteration.

Selection of the appropriate candidate image is achieved above by pressing the corresponding key on the keypad. Selection is achieved by a normal, brief, press of the key. However, if the user wishes simply to start the image stream from one of the images without going to a further iteration, he or she can press the appropriate key corresponding to the image from which the image stream should continue and can hold the key down for a longer period of time, for example for 1 second. This kind of selection can be described as a "hard" selection which refers to the duration for which the key is held rather than how hard it is pressed. A hard selection could also be achieved by some other distinct way of selecting the image. For example, the numbered key on the keypad could be pressed together with a shift or extension key which might be present (not shown). Instead of selecting candidate images using the numbered keys of a keypad, an on-screen selection system may be used, in which the candidate image is selected on screen. Typical examples of on-screen selection would be a moveable pointer which can be positioned over a candidate image to be selected, and then selected by the click of enter button on the keypad. Another type of on-screen system highlights each image by use of a focus, and arrow keys or a joystick on the keypad can be used to move the focus from candidate image to candidate image. The candidate image can be selected, for example, by depressing an enter key. In such cases, a hard selection could be made by pressing an alternative key, or by double clicking the selection or enter key instead of a single click used for making a soft selection. In a further embodiment (not shown), the screen is touch sensitive, and to make a selection, the user simply touches the appropriate candidate image on the screen.

More details of the embodiments of this invention will now be described.

Initially, the image stream is displayed on the visual display unit 9. A viewer initiates, in a first step 101, a process implementing the method by pressing a search key on the controller 11. This selects an initial reference image. It could be the image displayed on the screen at the time of the depression of the search key, or an image from a short time before the depression of the key. In the example that follows, the image is taken from the image stream five seconds before the key is depressed. The search which is initiated here is one which allows the user to skip advertisements. Therefore the user initiates the search when he reaches the beginning of the advert break, and it allows him to skip it quickly and easily. The initial reference time corresponds generally to the beginning of the advert break. The search will take place over the following 320s of image stream. In the process all further images in the image stream have a time lapse T with respect to an initialisation image. The initialisation image is the image that was being displayed when the search key was depressed to initialise the search facility. The reference image therefore has a time lapse T of -5 seconds. By having a time lapse T of -5 seconds, the full range of the video stream is extended slightly. This allows the first candidate image to be set a little before the time at which the search is selected. In some embodiments, users might find it more acceptable if the time is set to 0 seconds. This embodiment will be described with reference to Figure 4.

In a second step 103, the processor sets the conditions for the search. Each iteration has a count value (C), which is initially set to one. In each iteration, the processor selects a number of candidate images. The reference time of the first iteration $T_{R1}$ ($T_{RC}$, where C is the iteration count value) is set to the same value as the first candidate image 13, $T_1$.

In a third step, 105, the processor 5 instructs the memory cache 7 to provide nine candidate images 15 from the image stream. Each image is spaced apart in the image stream from the adjacent images by a time interval, $\delta t$, of 40 seconds. This value could be changed by the user if required. For example, the value could be changed 131, 132 using the volume keys 40. Instead of increasing and decreasing the sound, the volume keys could be used for increasing 131 and decreasing 132 the time interval 133, 134. Alternatively, the value of the time gap could be changed 133, 134 using some other user input from the keypad or elsewhere. In Figure 3 in boxes 133 and 134, when the volume up or volume down buttons are pressed, the time lapse is either doubled or halved giving a geometric progression. However, alternative embodiments might increase or decrease the time lapse by a set amount, for example by 20% of the original time lapse. This will increase or decrease the time lapse by steps which are an arithmetic progression instead of a geometric one. $\delta t$ is the time gap between images, i.e. between $T_1$ and $T_2$, $T_2$ and $T_3$ etc. It is dependent on the value of C. In this embodiment;
for

C = 1 $\delta t$ = 40s

C = 2 $\delta t$ = 5s

C = 3 $\delta t$ = 0.625s

The first of these nine images is the first candidate image 13. If the memory cache does not store any of these images, the processor 5 instructs the data store 3 to send the image stream having these missing images to the memory cache 7. The memory cache 7 then despatches the candidate images 15 to the visual display unit 9. The images are displayed on the visual display unit in chronological order. The first image at $T_1$, in the image stream is shown as the first candidate image 13, in the top left hand corner of screen 17 of the visual display unit 9. The second image at $T_2$ in the image stream is shown in the middle of the top row on the screen 17. This repeated for each of the remaining seven images so that the last candidate image at $T_9$ in the image stream is the image in the bottom right hand corner of the screen 17, as shown in Figure 4. The candidate images are displayed to the viewer until the processor 5 receives a signal from the controller 11. The processor 5 awaits a signal from the controller 11 in the fourth step 107. Any one of a number of different inputs can be received from the controller 11. This will be clear from Figure 3. However, ultimately it is necessary for the user to select one of the candidate images which is designated here as the fifth step 109. However, it will be appreciated that between the fourth and fifth steps, there are other inputs which may be made.

The controller has a key pad that is a standard numerical key pad. Each numerical key 30 is between one and nine, inclusive, and has an associated candidate image 13. A viewer selects one of the new candidate images. The reference image for the next iteration will be the candidate image before the one that was selected (pressing key 6 selects the fifth image as the reference image for the next iteration). In a sixth step 109, where the key is a not a numeric key 30 between 1 and 9, the process returns to the fourth step 107 until a numeric key is pressed. As described above, if a hard selection is made, the video stream will run from the image selected. In this embodiment, a hard selection is made by double pressing or double clicking on the numeric key, and this is identified by the fifth step 135. If no double click is detected, then the process moves to step 6. If, however, a double input is detected, then playback is resumed 136.

In the sixth step 109, the processor notes the input numeric key, $\alpha$. In a seventh step 111, the iteration count C is checked to ensure it is not equal to three, indicative of a third iteration. (The process is arranged to stop after three iterations). If C is not equal to three, the process continues to a seventh step 113 to continue the process in a further iteration in which the time interval, $\delta t$, is reduced.

In the eighth step 113 the conditions of the search are altered. The value of count C is increased by one. The time in the image stream of the new first candidate image, $T_1$, i.e. the new reference image, is calculated whereby the current time interval, $\delta t$, is multiplied by an integer one less than the value of depressed numeric key, $\alpha$, and this value is then added to the time of the previous first candidate image:

$$T_{1\,new} = T_{1old} + ((\alpha\text{-}1) \times \delta t)).$$

The reference time value for the second iteration, $T_{R2}$, is set to the new value of the first candidate image, $T_{1new}$. The process then returns to the third step 105. The time interval, $\delta t$, is reduced by a factor of eight, although this could be any value up to one less than the number of candidate images selected from. The visual display unit 9 displays nine candidate images as shown in Figure 5, where the nine images are each spaced apart along the image stream by a time interval of five seconds. The selection of candidate images shown in Figure 5 are derived from selecting the seventh image of the first iteration shown in Figure 4. In Figure 5 the first candidate image 19 is located in the image stream 195 seconds after the initialisation image.

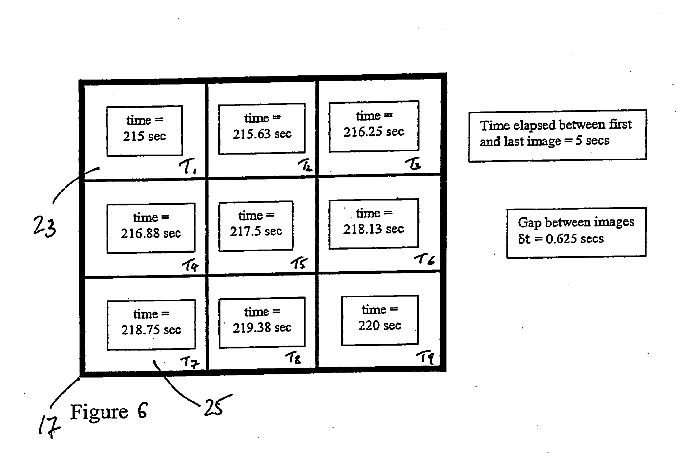

The third, fourth, fifth, sixth, seventh and eighth steps of the process are repeated, as shown by way of example in Figure 6 for the third iteration. In the second iteration of this example, the numeric key six is pressed, and in third iteration the numeric key seven is pressed. In the third iteration the candidate images are spaced apart by intervals of 0.625 seconds. Where, in the seventh step 111, the iteration count, C, is found to be three, the process then proceeds to a ninth step 115. The candidate image before the selected image becomes the starting image.

In the ninth step 115, the starting image is displayed on the screen. In one embodiment the visual display unit 9 starts the playback of the image stream immediately. In another embodiment, the image stream is frozen on the display 9 until a key on the controller 11 is depressed to initiate playback.

In this preferred embodiment, playback of an image stream can resume without a user selecting one of the candidate images. If a back up button 38, which could also be the numeric key zero 32, is pressed on the numeric key pad of the controller 11, the process enters a "backup" mode 117. If the iteration count C has a value equal to one, in the step 119, the image stream is played back from one second in the image stream preceding the initialisation image, as in step 121. If the iteration count, C, does not equal one, in step 123, the reference image is the same as the first candidate image of the previous iteration, and the value of the iteration count C is reduced by one. The process then returns to the third step 105, in which the visual display unit 9 displays the candidate images of the previous iteration. This also enables a viewer to review the candidate images of a previous iteration if he realises that he has selected the wrong candidate image in an iteration.

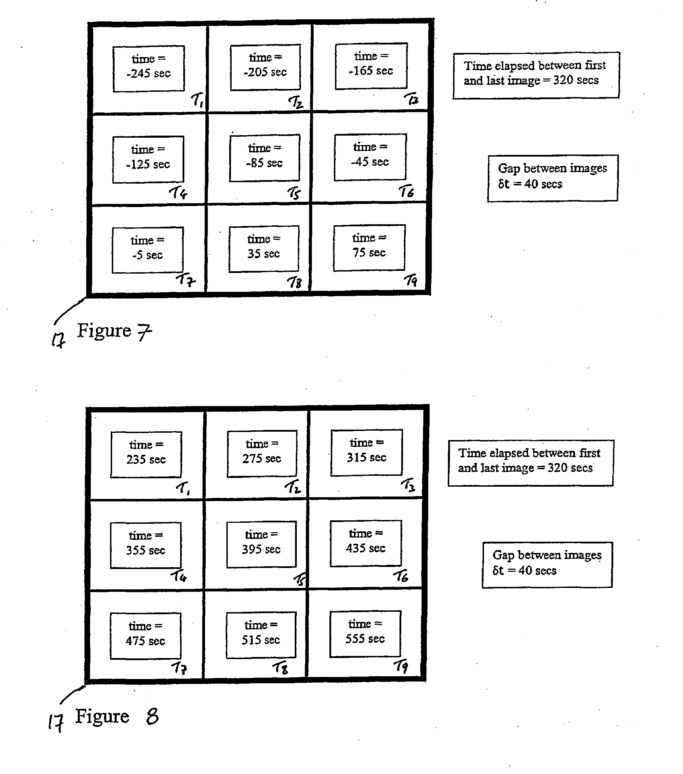

Alternatively or additionally, if the viewer selects candidate images which have a range which does not include the starting image, he can search through the image stream without returning to the previous iteration. If the starting image lies before the first candidate image on the visual display unit 9, at $T_9$ in the image stream, the viewer could depress a channel up button 34 on the controller 11. The process enters a "scroll up" mode 125. In this step 127 the time of the first candidate image $T_1$ is reset to precede the current value of $T_1$ by six time intervals, $\delta t$, of the current iteration. The time value of the current iteration $T_{RC}$ is set equal to the new value of $T_1$. The process returns to the third step 105, the visual display unit 9 displaying nine candidate images, each spaced apart by the time interval, $\delta t$, and where the first candidate image is taken from the image stream at the new $T_1$. Figure 7 shows the effect of the scroll up process of the image shown in Figure 4.

If the viewer chooses to search for the starting image after the last candidate image currently displayed, the viewer could depress a channel down button 36 on the key pad of the controller 11, to enter a "scroll down" process 129. In this step 130, the time of the seventh candidate image at $T_7$ becomes the time of the first candidate image at $T_1$. The time value of the current iteration $T_{RC}$ adopts the new value of $T_1$. The process then returns to the third step 105, as shown in Figure 8, where the scroll down process has been applied to the images displayed in Figure 4.

In using the invention when playing back a recording, the user can select an initial reference image 101. The display shows nine images 40 seconds apart and the first image $T_1$ precedes the initialisation image by five seconds, as shown in Figure 4. If the viewer were to select the seventh image 21 in Figure 4, the visual display unit 9 would then display nine images five seconds apart, as shown in Figure 5, the last image being the seventh image 21 of Figure 4. If the viewer then selects the sixth image 23, the visual display unit 9 displays the nine images as shown in Figure 6, where the last image $T_9$ is the sixth image 23 of Figure 5, and the images are 0.625 seconds apart. The viewer can select his start image from any of these nine images. The start image will be the candidate image that precedes the image that is finally selected. The visual display unit 9 will then start displaying the image stream from the start image.

In all these candidate images, the position of each image in the image stream is expressed as a function of time with respect to the initialisation image, and can be displayed on the visual display unit 9 in association with the respective candidate image.

This preferred embodiment searches for the start image by selecting an image to be the first image of the range of the image stream that the viewer chooses to watch. The method can be modified so the selected image for each iteration becomes the first image of the next iteration, so the method selects the start image by way of the last image in the range of the image stream that the viewer chooses not to watch.

The numeric key values associated with the image can also be displayed with the associated image. Any number of images can be shown on the visual display unit 9, so long as at least two are shown, and the viewer has a means of selecting all of the images in the image stream. The initial time interval between candidate images can be any value appropriate for the purpose of the search, and the number of iterations can also be any predetermined number. Indeed the number of iterations need not be predetermined and may be conditional upon the size of the time interval between candidate images in an iteration.

The ratio of the time interval between iterations can be any value, so long as there are a sufficient number of candidate images, and the time interval between them is sufficient, for the whole of the chosen range image stream to be searched.

The information about each candidate image, for example the corresponding key on the key pad and the time location in the image stream with respect to the initial reference image, can be displayed so this information does not obscure the images.

The images can be stationary or moving. If the images are moving the duration of each image clip is 2 seconds, but could be more or less than this in other embodiments. Once the time interval is reduced to be shorter than the time interval between candidate images in the image stream, each image is displayed for the duration of the time interval, each image starting from one of the candidate images. To ensure he views the image of his chosen starting point, a viewer will select a candidate image as his reference image that precedes the starting image he would normally choose if the images were stationary.

The image stream can comprise a series of frames. If the time in an image stream selected from an image does not have an image frame, or has a contrast that is insufficient for the image to be discernible, the next frame in the image stream is displayed.

The controller can be operated by keys or operating means other than a numeric keys. The arrangement of the candidate images can be arranged to suit the arrangement of the keys used on the controller.

Additional search modes may be used within the scope of this invention. In an additional embodiment which may be executed on the system shown in Figure 1, the processor may be arranged such that when a user searches forwards or backwards through an image stream while watching the image stream (cue/review), when the user stops searching, a multi-image search mode is entered. In conventional machines for watching video programs or recordings, it is possible to search forwards or backwards whilst watching the image stream, and often it is possible to search at different speeds. Such searching forwards and backwards is normally done to find a particular point at which the user wishes to start watching a recording. In such a search, an amount of overshoot is inevitable: it takes a certain amount of time to stop the search once he recognises the point at which he wishes to start from. Overshoot will depend on two things, firstly the speed of reactions of the user, and secondly the speed at which the video stream was being searched through. The faster the searching, the greater the overshoot. In this search mode, when the searching is stopped, the processor in the device is arranged such that it enters the multi-image search mode in which a number of images are put on screen, preferably nine, which are shown in the order in which they will appear in the image stream. Where the multi-image search mode has been entered following a search backwards through the image stream, the final image which is reached at the end of the overshoot forms the first candidate image. Eight subsequent images are shown, each of which is spaced from the previous image by a time lapse or time space. The time lapse might be dependent on the speed with which the search forward or search back was carried out immediately prior to the search being stopped. Therefore, a fast search might require a time lapse of 10 seconds between each image, whereas a slower search will result in a smaller overshoot, and the time lapse may be 1 second. These are, however, examples, and the time lapse might be greater than 10 seconds or less than 1 second.

If the searching prior to the overshoot was a forward search, then the image selected at the end of the overshoot will form the last of the candidate images, and the other eight images will be arranged sequentially before that final candidate image. Selection by the user of the most appropriate candidate image can then permit the image stream to play from that point, or alternatively to result in one or more further iterations.

Some personal video recorders that are available can be arranged to record the last 10, 15, or an alternative number of minutes of a live broadcast or other image stream that a viewer is watching. In an additional search mode, which might be called an action replay search mode, the processor is arranged such that when the viewer is watching a broadcast or other image stream, a period of recently watched image stream is recorded, for example the preceding 10 minutes of the image stream, and the processor is further arranged such that, when the search button is pressed, it pulls up nine candidate images from within that recorded time. The ninth image will be the one that was current when the search button was pressed. If the spacing is 10 seconds, the minimum length of the image stream which must have been recorded will be 80 seconds. Pressing the number on the keypad relating to the candidate image which is selected will cause the video stream to start from the selected candidate image, effectively giving an action replay facility. It may be possible to increase or decrease the time lapse between candidate images using the volume control buttons. If it is possible to increase the time lapse, then more than 80 seconds will need to be recorded from the preceding viewed image stream. Further iterations might also be possible, if required. The system 1 on which the invention operates is anything that is suitable to playback a recording as an image stream, for example a CD Rom player, a DVD player, a computer running a video player program or a Sky+™ Box. Examples of computer video players are Microsoft Media Player and Adobe Flash Player and RealPlayer. The software which give the functionality of the present invention can be incorporated into the computer video player software, or can be supplied by way of a plug-in which adds the functionality to an existing computer video player program which does not originally have the functionality of the present invention. The data store 3 can be connected to the processor 5, or it can be remote from the rest of the system 1. The arrangement of the processor 5, the memory cache 7, the data store 3 and the visual display unit 9 so far described is only exemplary. The processor 5 could exclusively communicate with the data store 3. The memory cache 7 could be remote from the data store 3 and the processor 5, of be located with the visual display unit 9. The visual display unit 9, the processor 5 and the data store 3 may each therefore comprise a computer including a computer readable medium.

The computer readable medium can be any available media that can be accessed by computer and includes both volatile and non-volatile media, and removable and non-removable media. By way of example, and not limitation, computer readable media may comprise computer storage media and communication media.

Computer storage media includes volatile and non-volatile removable and non-removable media implemented in any method or technology for storage of information such as computer readable instructions, data structures, program modules, or other data. Computer storage media includes, but is not limited to RAM, ROM, EEPROM, flash memory or other memory technology, CD-Rom, digital versatile disks (DVD) or other optical disk storage, magnetic disk storage or magnetic storage devices, or any other medium which can be used to store the desired information and which can be accessed by the computer.

Communication media typically embodies computer readable instructions, data structures, program modules, or other data in a modulated data signal such as carrier wave or other transport mechanism and includes any information delivery media. The term "modulated data signal" means a signal that has one or more of its characteristic set or changed in such a manner as to encode information in the signal. The term "image stream" referred to herein is such a modulated data signal that encodes image data. By way of example, and not limitation, communication media includes wired media such as wired network or direct wired connection, and wireless such as acoustic RF, infrared and other wireless media. Combinations of any of the above should be included within the scope of computer readable media.

The image stream may also have an audio component and the system is arranged to broadcast that audio component together with display of the image stream on the visual display unit.

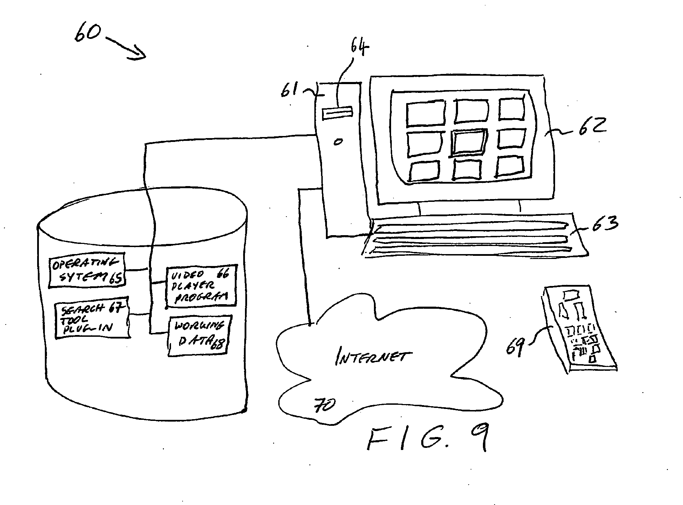

A computer implemented embodiment is shown in Figure 9 in which a computer system 60 is shown including a PC, a computer screen 62 a keyboard 63 and a controller 69. The PC includes a media drive unit which, in this example, is a DVD player 64. It will be appreciated that any suitable drive might be included, or the PC's hard drive could be used as a source of the image stream. Additionally, the image stream could be received from any other suitable source, including the Internet 70. Running on the PC 61 is an operating system 65 on which is running a video player program 66, such as Microsoft Media Player, a search tool plug-in 67, and working data on which the video player program 66 operates. In this example, the working data 68 would normally be the video stream. The search tool plug-in 67 is a piece of software in addition to the video player program, although, it could be incorporated within the video player program itself. Thus, the plug-in can be supplied as independent software, or can be incorporated within the video player program as required. The combination of the video player program and the search tool plug-in operating together means that, during the use of the video player program to display a video stream, the plug-in 67 can be invoked so as to utilise the searching facilities described in Figures 3 to 8. A controller 69 could be used, or the functions of the controller's buttons could be substituted by keys on the keyboard 63, buttons available on a touch screen 62, or buttons selectable using a mouse (not shown).

## Claims

1. A method of selecting a starting image at which to start displaying an image stream, the method comprising the iterative steps of:

   (1) displaying a plurality of candidate images from within a part of the image stream for selection by a user of the closest candidate image; and
   (2) displaying a plurality of candidate images from within a time range of the image stream close to the candidate image selected by the user in response to step (1) for selection by a user of the closest candidate image;
   wherein the canditate images are displayed in chronological order each spared sport by a time interval, the time interval being reduced for each successive iteration
   the method further comprising the step of displaying the starting image in response to the selection of a candidate image in the last of the iterative steps;
   the method comprising a scrolling mode in which, if the starting image lies in the image stream at an earlier time than the first candidate image that is displayed, or at a later time than the last candidate image that is displayed, the candidate images that are displayed in any of the iterative steps are replaced by candidate images in an adjacent part of the image stream to effect scrolling

2. A method as claimed in claim 1, further including one or more iterative steps of displaying a plurality of candidate images from within a time range of the image stream close to the candidate image selected by the user in response to the previous iteration.

3. A method as claimed in any of claims 1 to 2, wherein, in displaying the candidate images, the candidate images are arranged in the same configuration as a plurality of keys on a user controller (11) that is used to reselect the reference image.

4. A method according to claim 3, wherein, in response to a hard selection of a candidate image, the image stream starts to be played from that image.

5. A method according to claim 4, wherein holding a key to select a candidate image for a relatively long duration constitutes a hard selection.

6. A method according to claim 4 wherein pressing a key twice in a short period of time constitutes a hard selection.

7. A method according to any one of claims 1 to 2. wherein the candidate images are arranged on a touch-sensitive screen (62) such that touching a candidate image on the screen selects that candidate image.

8. A method according to any one of the preceding claims, wherein each candidate image is displayed together with a corresponding selection number.

9. A method according to any one of the preceding claims, including defining the image stream from which candidate images are displayed, including a reference image at the beginning of the image stream.

10. A method as claimed in claim 7 the step of displaying the candidate images further comprises the step of displaying the time lapse of each candidate image with respect to the reference image.

11. A method as claimed in any of claims 2 to 10, wherein the candidate images are stationary.

12. A method as claimed in any one of the preceding claims, wherein, on each successive iteration, the time interval reduces according to a geometric progression.

13. A method as claimed in any one of to preceding claims, wherein the time lapse between candidate images is adjustable.

14. A method as claimed in claim 13, wherein the time lapse between candidate images can be adjusted using a key or keys on the controller, or using selectable regions on a touch-sensitive screen (62).

15. A method as claimed in any of the preceding claims, wherein each step of displaying candidate images includes displaying the reference image as one of the candidate images.

16. A method as claimed in any one of the preceding claims, wherein the reference image precedes one or more of the candidate images in the image stream.

17. A method as claimed in any preceding claim, wherein the starting image is displayed once a predetermined number of iterations have been executed.

18. A method as claimed in any preceding claim, further comprising the step of counting the number of iterations that are executed by the method.

19. A method as claimed in any preceding claim, further comprising displaying the image stream starting from the selected starting image.

20. A method as claimed in any one of the preceding claims, including analysing the time lapse between candidate images or the duration of the image stream and increasing or decreasing the number of iterations executed by the method accordingly.

21. A computer program or suite of computer programs arranged such that when executed by a computer it controls the computer to perform the method of any one of the preceding claims.

22. A computer readable storage medium storing the computer program or at least one of the suit of computer programs of claim 21.

23. A system (1) for supplying a stream of images, comprising:

(1) a processor (5) arranged to receive a stream of images from an image source and to generate a video output to a display device (9); and
(2) a user controller (11) arranged to operate the processor (5) to initiate a search mode to find a starting image at which to start displaying the image stream, wherein the processor (5) is arranged to carry out the iterative steps of:

(a) displaying a plurality of candidate images from within a part of the image stream for selection by a user of the closest candidate image; and
(b) subsequently repeating step (a) from within a time range of the image stream close to the previously selected candidate image,
wherein the canditate images are displayed in chronological order each spared sport by a time interval, the time interval being reduced for each successive iteration
the processor being further arranged to display the starting image in response to the selection of a candidate image in the last of the iterative steps ; the processor being arranged with a scrolling mode in which, if the starting image lies in the image stream at an earlier time than the first candidate image that is displayed, or at a later time than the last candidate image that is displayed, the candidate images that are displayed in any of the iterative steps are replaced by candidate images in an adjacent part of the image stream to effect scrolling.

24. A system according to claim 23 wherein the starting image is displayed once a predetermined number of iterations have been executed.

25. A system according to claim 23 or 24 wherein the user controller (11) is arranged to count the number of iterations.

26. A system according to any one of claims 23 to 25, wherein the processor (5) is arranged to display the image stream from the selected starting image.

27. A system as claimed in any one of claims 23 to 26, wherein the processor (5) is further arranged in use to reduce a range of the image stream searched in each successive iteration.

28. A system as claimed in claim 27, wherein in each iteration the controller (11) is arranged in use to reselect one of the candidate images displayed on the display (9) as the reference image.

29. A system as claimed in claim 28. wherein the system is arranged to start running the image stream from a candidate image in response to a hard selection of that candidate image.

30. A system as claimed in claim 29, wherein the system is arranged such that the hard selection is achieved by holding a key of the controller (11) for a relatively long duration.

31. A system as claimed in claim 29, wherein the system is arranged such that the hard selection is achieved by pressing a key of the controller (11) twice in a short period of time.

32. A system as claimed in any one of claims 23 to 28, including a touch-sensitive screen (62) arranged to display the candidate images for selection.

33. A system as claimed in any one of claims 23 to 32 claims, wherein the reference images precedes one or more of the candidate images in the image stream.

34. A system as claimed in any of claims 23 to 33 claims, wherein the processor is arranged to cause the display (9) to display the time lapse for each candidate image with respect to the initial reference.

35. A system according to any one of claims 23 to 34, wherein the processor (5) is arranged to allow the time lapse between candidate images to be adjusted.

36. A system according to claim 35, wherein the controller (11) includes one or more keys arranged to be operated by a user to adjust the time lapse between candidate images.

37. A system as claimed in any of claims 23 to 36, wherein the controller (11) has at least two keys configured in the same arrangement as the candidate images displayed on the display, each candidate image corresponding to a key.

38. A system as claimed in any one of claims 23 to 37, wherein the reference image is reselected a predetermined number of times.

39. A system according to any one of claims 23 to 38, wherein the processor (5) is arranged to analyse the time lapse between candidate images or the duration of the image stream, and to increase or decrease the number of iterations executed by the method accordingly.

40. A system as claimed in any of claims 23 to 39, wherein the processor (5) is arranged to control the display means (9) to display the image stream starting from the starting image.

41. A system as claimed in any of claims 23 to 39, wherein the system further comprises a memory cache (7), the memory cache (7) being controllable by the processor (5) and being arranged to download a part of the image stream locally to the processor (5).

42. A system as claimed in any of claims 23 to 41, wherein the system is a personal video recorder, and the personal video recorder includes the processor (5), and the personal video recorder has a memory.

**Patentansprüche**

1. Ein Verfahren für die Auswahl eines Anfangsbildes, ab dem sodann die Anzeige eines Bilderstromes gestartet wird, das Verfahren die sich wiederholenden Schritte umfasst.:

   (1) Anzeigen einer Vielzahl Abbildungen von Kandidaten aus einem Teil des Bilderstromes, die zur engsten Auswahl für einen Anwender stehen und die nächste Abbildungen von Kandidaten bilden und

(2) Anzeigen einer Vielzahl von Abbildungen von Kandidaten innerhalb eines Zeitraumes des Bilderstromes, der nahe dem vom Anwender ausgewählten Bildern liegt und vom Anwender in Antwort auf den Schritt (1) zur Auswahl der Abbildungen von Kandidaten erfolgt, um hierdurch das nächste Abbildung eines Kandidaten auszuwählen, wobei die Abbildungen von Kandidaten in chronologischer Reihenfolge angezeigt werden, und jede Abbildung eines Kandidaten durch ein Zeitintervall von einander beabstandet ist und das Zeitintervall für jede sukzessive Wiederholung reduziert wird, und das Verfahren des Weiteren den Schritt, des Anzeigens des Anfangsbildes, als Anwort auf die Auswahl der Abbildung eines Kandidaten, gemäß den vorgenannten sich wiederholenden Schritt umfasst, das Verfahren des Weiteren ein Modus für ein Bildschirmrollen umfasst, bei dem, wenn das Anfangsbild in dem Bilderstrom liegt, bei einem früheren Zeitpunkt liegt, sodann die erste Abbildung eines Kandidaten angezeigt wird, oder bei einem späteren Zeitpunkt die Abbildung eines Kandidaten die jenige Abbildung des Kandidaten, ist, die nach einen der sich wiederholenden Schritte angezeigt wird und das durch die Abbildung des Kandidaten ersetzt wird, welches in einem angrenzenden Teil des Bilderstromes liegt, um das Bildrollen zu erzeugen.

2.  Ein Verfahren wie gemäß Anspruch 1 beansprucht, des Weiteren beinhaltend einen oder mehrere sich wiederholende Schritte des Anzeigens von einer Vielzahl von Abbildungen von Kandidaten innerhalb aus einem Zeitraum des Bildstromes, der nahe der Abbildung des Kandidaten liegt und von dem Anwender als Antwort aus den vorausgegangenen Wiederholungen ausgewählt worden ist.

3.  Ein Verfahren gemäß einem oder mehreren der vorgenannten Ansprüche 1 bis 2, wobei bei dem Anzeigen der Abbildungen des Kandidaten, das Abbild des Kandidaten in der selben Konfiguration angeordnet ist, wie eine Vielzahl von Tasten an einem Controller (11) des Anwenders, die dazu verwendet werden, die Referenzabbildung wieder auszuwählen.

4.  Ein Verfahren gemäß Anspruch 3, wobei als Antwort auf eine bindende Auswahl einer Abbildung eines Kandidaten, der Bildstrom startet und von diesem Bild an abgespielt wird.

5.  Ein Verfahren gemäß Anspruch 4, wobei das halten einer Taste, um eine Abbildung eines Kandidaten für einen relativ langen Zeitraum auszuwählen, was eine bindende Auswahl zur Folge hat.

6.  Ein Verfahren gemäß Anspruch 4, wobei das zweimalige Drücken der Tastatur innerhalb eines kurzen Zeitraumes eine bindende Auswahl zur Folge hat.

7.  Ein Verfahren gemäß einem der Ansprüche 1 bis 2, wobei die auszuwählen, auf einen berührungsempfindlichen Bildschirm (62) angeordnet sind, so dass durch das Berühren einer Abbildung eines Kandidaten auf dem Bildschirm die Abbildung des Kandidaten auswählbar ist.

8.  Ein Verfahren gemäß einem oder mehreren der vorgenannten Ansprüche, wobei jede Abbildung von Kandidaten zusammen mit einer mit dieser korrespondierenden Auswahlnummer angezeigt wird.

9.  Ein Verfahren gemäß einem oder mehreren der vorgenannten Ansprüche, beinhaltet das Definieren des Bildstromes aus den angezeigten Abbildungen von Kandidaten, einschließlich eines Referenzbildes am Anfang des Bildstromes.

10. Ein Verfahren gemäß Anspruch 7, wobei der Schritt des Anzeigens der Abbildung eines Kandidaten des Weiteren den Schritt des Anzeigens des Zeitverlaufes für jede Abbildung des Kandidaten in Bezug auf das Referenzbild umfasst.

11. Ein Verfahren gemäß einem der Ansprüche 2 bis 10, wobei die Abbildungen der Kandidaten ortsgebunden ausgebildet sind.

12. Ein Verfahren gemäß einem oder mehreren der vorgenannten Ansprüche, wobei bei jeder sukzessiven Wiederholung sich das Zeitintervall gemäß einer geometrischen Progression reduziert.

13. Ein Verfahren gemäß einem oder mehreren der vorgenannten Ansprüche, wobei der Zeitverlauf zwischen den Abbildungen der Kandidaten einstellbar ausgebildet ist.

14. Ein Verfahren gemäß Anspruch 13, wobei der Zeitverlauf zwischen den Abbildungen der Kandidaten durch das Verwenden einer Taste oder Tasten auf dem Controller, oder durch das Verwenden eines ausgewählten Bereiches auf einem berührungsempfindlichen Bildschirmes (62) einstellbar ist.

15. Ein Verfahren gemäß einem oder mehreren der vorgenannten Ansprüche, wobei jeder Schritt des Anzeigens von Abbildungen von Kandidaten das Anzeigen des Referenzbildes, als eine der Abbildungen einschließt.

16. Ein Verfahren gemäß einem oder mehreren der vorgenannten Ansprüche, wobei die Referenzabbildung einem oder mehreren Abbildungen von Kandidaten in dem Bildstrom vorangestellt ist.

17. Ein Verfahren gemäß einem oder mehreren der vorgenannten Ansprüche, wobei das Anfangsbild angezeigt wird, sobald eine vorbestimmte Anzahl von Wiederholungen ausgeführt worden sind.

18. Ein Verfahren gemäß einem oder mehreren der vorgenannten Ansprüche, des Weiteren umfassend die Schritte des Zählens der Wiederholungen die durch das Verfahren ausgeführt werden.

19. Ein Verfahren gemäß einem oder mehreren der vorgenannten Ansprüche, des Weiteren umfassend, das Anzeigen des Bilderstromes, beginnend mit dem ausgewählten Startbild.

20. Ein Verfahren gemäß einem oder mehreren der vorgenannten Ansprüche, beinhaltend das Analysieren des Zeitverlaufes zwischen den Abbildungen von Kandidaten oder das Analysieren der Dauer des Bilderstromes und das Ansteigen oder Nachlassen der Anzahl von Wiederholungen, die gemäß des Verfahren ausgeführt werden.

21. Ein Programm für einen Computer oder einer Abfolge von Programmen für einen Computer, die derart ausgebildet sind, das wenn diese durch einen Computer ausgeführt werden, sie den Computer steuern, um hierdurch das Verfahren gemäß einem oder mehreren der vorgenannten Ansprüche auszuführen.

22. Ein von Computern lesbares Speichermedium zum Speichern eines Programms für einen Computer oder wenigstens eines Programms, aus einer Folge von Programmen für Computer gemäß Anspruch 21.

23. Ein System (1) für das Bereitstellen eines Bilderstromes umfassend:

(1) einen Prozessor (5), der so angeordnet ist, um einen Bilderstrom von einer Bildquelle zu empfangen, und um einer Ausgabe eines Videos auf einem Bildschirm von einer Vorrichtung (9) zu erzeugen, und
(2) einen Controller (11) für einen Anwender, der so angeordnet ist, um den Prozessor (5) zu betreiben, um hierdurch einen Suchmodus zu initiieren, um ein Startbild zu finden, bei dem das Anzeigen des Bilderstrom gestartet wird, wobei der Prozessor (5) derart angeordnet ist, dass er die sich wiederholenden Schritte von

(a) Anzeigen einer Vielzahl von Abbildungen von Kandidaten aus innerhalb eines Teiles von einem Bildstrom wiederholt, der zur Auswahl für einen Anwender zur Verfü-

gung steht, und der Abbildung eines Kandidaten am nächsten kommt, und
(b) nachträgliches Wiederholen des Schrittes (a) innerhalb eines Zeitraums von dem Bilderstrom, der am nächsten zu der zuvor ausgewählten Abbildung eines Kandidaten liegt, durchzuführen, wobei die Abbildungen von Kandidaten in chronologischer Reihenfolge angezeigt werden, und jede Abbildung eines Kandidaten durch ein Zeitintervall von einander beabstandet ist, und das Zeitintervall für jede sukzessive Wiederholung reduziert wird, und der Prozessor des Weiteren derart angeordnet ist, um das Startbild als Antwort auf die Auswahl des Kandidatenbildes gemäß den sich wiederholenden Schritten anzuzeigen, und der Prozessor des Weiteren ein Modus für ein Bildschirmrollen umfasst, bei einem früheren Zeitpunkt liegt, wenn das Anfangbild in dem Bilderstrom liegt, sodann die erste Abbildung eines Kandidaten zu einem früheren Zeitpunkt angezeigt wird, oder bei einem späteren Zeitpunkt die Abbildung eines Kandidaten die jenige Abbildung ist, die nach einen der sich wiederholenden Schritten angezeigt wird, und das durch die Abbildung des Kandidaten ersetzt wird, welche in einem angrenzenden Teil des Bilderstromes liegt, um das Bildrollen zu erzeugen.

24. Ein System gemäß Anspruch 23, wobei das Startbild angezeigt wird sobald eine vorbestimmte Anzahl von Wiederholungen ausgeführt worden sind.

25. Ein System gemäß einem der Ansprüche 23 oder 24, wobei der Controller (11) des Anwenders derart ausgebildet ist, so dass er die Anzahl der Wiederholungen zählt.

26. Ein System gemäß einem der Ansprüche 23 bis 25, wobei der Prozessor (5) derart ausgebildet ist, dass er den Bildstrom ab dem ausgewählten Startbild anzeigt.

27. Ein System gemäß einem der Ansprüche 23 bis 26, wobei der Prozessor (5) derart angeordnet ist, dass er die Reichweite des Bildstromes in jeder aufeinander folgenden Wiederholung reduziert.

28. Ein System gemäß Anspruch 27, wobei in jeder Wiederholung der Controller (11) derart angeordnet ist, dass er während der Benutzung eines der Abbildungen eines Kandidaten diese auf einem Bildschirm (9) als eine Referenzabbildung darstellt.

29. Ein System gemäß Anspruch 28, wobei das System derart angeordnet ist, um den Bildstrom aus den Abbildung der Kandidaten als Antwort auf eine blindenden Auswahl dieser Abbildungen zu starten.

30. Ein System gemäß Anspruch 29, wobei das System derart ausgebildet ist, dass die bindende Auswahl durch das Halten einer Taste des Controllers (11) für einen relativ lang anhaltenden Zeitraum getroffen werden kann.

31. Ein System gemäß Anspruch 29, wobei das System derart ausgebildet ist, dass es die bindende Auswahl durch zweimaliges Drücken einer Taste des Controllers (11) innerhalb einer kurzen Zeitraumes getroffen werden kann.

32. Ein System gemäß einem oder mehreren der vorgenannten Ansprüche 23 bis 28, umfassend einen berührungsempfindlichen Bildschirm (62) der derart ausgebildet ist, um die Auswahl der Abbildungen der Kandidaten anzuzeigen.

33. Ein System gemäß einem oder mehreren der vorgenannten Ansprüche 23 bis 32, wobei die Referenzabbildung einer oder mehrerer Abbildungen der Kandidaten aus dem Bilderstrom vorausgeht.

34. Ein System gemäß einem oder mehreren der vorgenannten Ansprüche 23 bis 33, wobei der Prozessor derart ausgebildet ist, dass er den Bildschirm (9) dazu veranlasst, den Zeitraum für jede Abbildung eines Kandidaten unter Berücksichtigung des anfänglichen Bezugs anzuzeigen.

35. Ein System gemäß einem oder mehreren der vorgenannten Ansprüche 23 bis 34, wobei der Prozessor (5) derart ausgebildet ist, um die Zeiträume zwischen den Abbildungen von Kandidaten einzustellen.

36. Ein System gemäß Anspruch 35, wobei der Controller (11) eine oder mehrere Tasten umfasst, die es einem Anwender ermöglichen, den Zeitraum zwischen den Abbildungen der Kandidaten einzustellen.

37. Ein System gemäß einem oder mehreren der vorgenannten Ansprüche 23 bis 34, wobei der Controller (11) wenigsten zwei Tastenkonfigurationen aufweist, die in der selben Anordnung vorliegen, wie die der Abbildungen der Kandidaten die auf dem Bildschirm angezeigt werden, wobei jeder Abbildung eines Kandidaten eine Taste zugeordnet ist.

38. Ein System gemäß einem oder mehreren der vorgenannten Ansprüche 23 bis 37, wobei die Referenzabbildung eine vorbestimmte Anzahl von Wiederholungen wieder ausgewählt wird.

39. Ein System gemäß einem oder mehreren der vorgenannten Ansprüche 23 bis 38, wobei der Prozessor (5) ausgebildet ist, um den Zeitraum zwischen den Abbildungen der Kandidaten oder der Dauer des Bildstromes zu analysieren, und die Anzahl der Wiederholungen gemäß diesem Verfahren entweder zu erhöhen oder herabzusetzen.

40. Ein System gemäß einem oder mehreren der vorgenannten Ansprüche 23 bis 39, wobei der Prozessor (5) ausgebildet ist, um die Anzeigenmittel (9) zu steuern, um hierdurch den Start des Bilderstroms anzuzeigen.

41. Ein System gemäß einem oder mehreren der vorgenannten Ansprüche 23 bis 39, wobei das System des Weiteren einen Arbeitsspeicher (7) umfasst, und der Arbeitsspeicher (7) über einen Prozessor steuerbar ausgebildet ist, der derart ausgebildet ist, dass er einen Teil des Bilderstromes örtlich begrenzt auf den Prozessor (5) herunterladen kann.

42. Ein System gemäß einem oder mehreren der vorgenannten Ansprüche 23 bis 41, wobei das System ein personalisierter Videorecorder ist, und der personalisierte Videorecorder einen Prozessor (5) umfasst, und der personalisierte Videorecorder einen Datenspeicher umfasst.

## Revendications

1. Procédé de sélection d'une image de départ à partir de laquelle commencer la visualisation d'un flux d'images, ledit procédé comprenant les étapes itératives suivantes :

(1) affichage d'une pluralité d'images candidates provenant d'une partie du flux d'images afin que l'utilisateur puisse sélectionner l'image candidate la plus proche; et
(2) affichage d'une pluralité d'images candidates provenant de l'intervalle de temps du flux d'image proche de l'image candidate sélectionnée par l'utilisateur en réponse à l'étape (1), afin que l'utilisateur puisse sélectionner l'image candidate la plus proche ;
dans lequel les images candidates sont affichées par ordre chronologique, chacune étant séparée par un intervalle de temps, l'intervalle de temps étant réduit pour chaque itération successive ;
le procédé comprenant en outre l'étape consistant à afficher l'image de départ en réponse à la sélection d'une image candidate dans les dernières étapes itératives;
le procédé comprenant en outre une roulette de défilement, dans lequel, si l'image de départ se situe à l'intérieur du flux d'images à un moment antérieur à la première image candidate affichée, ou à un moment postérieur à la dernière image qui est affichée, les images candidates qui sont affichées, dans l'une quelconque des étapes itératives, sont remplacées par des images candidates se trouvant dans une partie adjacente du flux d'images afin d'effectuer le défilement.

2. Procédé comme revendiqué dans la revendication 1, comprenant en outre une ou plusieurs étapes itératives consistant à afficher une pluralité d'images candidates provenant de l'intérieur de l'intervalle de temps du flux d'images proche de l'image candidate sélectionnée par l'utilisateur en réponse à l'itération précédente.

3. Procédé comme revendiqué dans l'une quelconque des revendications 1 et 2, dans lequel, lors de l'affichage des images candidates, les images candidates sont disposées selon la même configuration qu'une pluralité de touches situées sur le dispositif de commande de l'utilisateur (11), qui est utilisé pour re-sélectionner l'image de référence.

4. Procédé selon la revendication 3, dans lequel, en réponse à la sélection ferme d'une image candidate, le flux d'images commence à être affiché à partir de ladite image.

5. Procédé selon la revendication 4, dans lequel maintenir une touche enfoncée pour sélectionner une image candidate pendant un temps relativement long constitue une sélection ferme.

6. Procédé selon la revendication 4, dans lequel appuyer deux fois successivement sur une touche constitue une sélection ferme.

7. Procédé selon l'une quelconque des revendications 1 et 2, dans lequel les images candidates sont disposées sur un écran tactile (62) de telle façon que le fait de toucher une image candidate sur l'écran sélectionne ladite image candidate.

8. Procédé selon l'une quelconque des revendications précédentes, dans lequel, chaque image candidate est affichée conjointement à un numéro de sélection correspondant.

9. Procédé selon l'une quelconque des revendications précédentes, incluant la définition du flux d'images à partir duquel les images candidates sont affichées, y compris une image de référence située au début du flux d'images.

10. Procédé comme revendiqué dans la revendication 7, dans lequel l'étape consistant à afficher les images candidates comprend en outre l'étape consistant à afficher l'intervalle de temps de chaque image candidate par rapport à l'image de référence.

11. Procédé comme revendiqué dans l'une quelconque des revendications 2 à 10, dans lequel les images candidates sont statiques.

12. Procédé comme revendiqué dans l'une quelconque des revendications précédentes, dans lequel, à chaque itération successive, l'intervalle de temps se réduit en suivant une progression géométrique.

13. Procédé comme revendiqué dans l'une quelconque des revendications précédentes, dans lequel l'intervalle de temps entre les images candidates est réglable.

14. Procédé comme revendiqué dans la revendication 13, dans lequel l'intervalle de temps entre les images candidates peut être réglé à l'aide d'une touche ou de touches situées sur le dispositif de commande, ou en utilisant des zones sélectionnables sur un écran tactile (62).

15. Procédé comme revendiqué dans l'une quelconque des revendications précédentes, dans lequel chaque étape consistant à afficher des images candidates inclut l'affichage de l'image de référence comme étant l'une des images candidates.

16. Procédé comme revendiqué dans l'une des revendications précédentes, dans lequel l'image de référence précède une ou plusieurs images candidates dans le flux d'images.

17. Procédé comme revendiqué dans l'une quelconque des revendications précédentes, dans lequel l'image de départ est affichée une fois qu'un nombre prédéterminé d'itérations a été exécuté.

18. Procédé comme revendiqué dans l'une quelconque des revendications précédentes, comprenant en outre l'étape consistant à compter le nombre d'itérations qui sont exécutées par le procédé.

19. Procédé comme revendiqué dans l'une quelconque des revendications précédentes, comprenant en outre l'affichage du flux d'images, en commençant par l'image de départ sélectionnée.

20. Procédé comme revendiqué dans l'une quelconque des revendications précédentes, comprenant l'analyse de l'intervalle de temps entre les images candidates ou de la durée du flux d'images et l'augmentation ou la diminution du nombre d'itérations exécutées par le procédé en conséquence.

**21.** Programme informatique ou suite de programmes informatiques organisés de telle façon que lorsqu'exécutés par un ordinateur, ils commandent à l'ordinateur de réaliser le procédé conformément à l'une quelconque des revendications précédentes.

**22.** Support mémoire lisible par un ordinateur pour stocker le programme informatique ou au moins l'un des suites de programmes informatiques de la revendication 21.

**23.** Système (1) utilisé pour fournir un flux d'images, comprenant :

(1) Un processeur (5) conçu pour recevoir un flux d'images provenant d'une source d'images et pour générer une sortie vidéo vers un dispositif d'affichage (9) ; et
(2) Une commande utilisateur (11) conçue pour faire fonctionner le processeur (5) pour lancer le mode de recherche afin de trouver l'image de départ à laquelle commencer l'affichage du flux d'images, dans laquelle le processeur (5) est conçu pour réaliser les étapes itératives consistant à

(a) afficher une pluralité d'images candidates provenant d'une partie du flux d'images pour permettre la sélection par un utilisateur de l'image candidate la plus proche ; et
(b) répéter par la suite l'étape (a) depuis un intervalle de temps du flux d'images proche de l'image candidate précédemment sélectionnée,

le processeur étant conçu avec un mode de défilement dans lequel, si l'image de départ se situe dans le flux d'images à un moment antérieur par rapport à la première image candidate qui est affichée, ou à un moment ultérieur par rapport à la dernière image candidate qui est affichée, les images candidates qui sont affichées dans l'une quelconque des étapes itératives, sont remplacées par des images candidates se trouvant dans une partie adjacente du flux d'images pour effectuer le défilement ;
le processeur étant également conçu pour afficher l'image de départ en réponse à la sélection de l'image candidate dans la dernière des étapes itératives.

**24.** Système selon la revendication 23, dans lequel l'image de départ est affichée une fois qu'un nombre prédéterminé d'itérations a été exécuté.

**25.** Système, selon les revendications 23 ou 24, dans lequel la commande utilisateur (11) est conçue pour compter le nombre d'itérations.

**26.** Système selon l'une quelconque des revendications 23 à 25, dans lequel le processeur (5) est conçu pour afficher le flux d'images à partir de l'image de départ sélectionnée.

**27.** Système comme revendiqué dans l'une quelconque des revendications 23 à 26, dans lequel le processeur (5) est également conçu pour être utilisé afin de réduire la portée du flux d'images examiné pendant chaque itération successive.

**28.** Système comme revendiqué dans la revendication 27, dans lequel, dans chaque itération, la commande (11) est conçue pour servir à re-sélectionner l'une des images candidates affichées sur l'écran (9) en tant qu'image de référence.

**29.** Système comme revendiqué dans la revendication 28, dans lequel le système est conçu pour commencer à faire défiler le flux d'images à partir d'une image candidate, en réponse à la sélection ferme de ladite image candidate.

**30.** Système comme revendiqué dans la revendication 29, dans lequel le système est conçu de telle façon que la sélection ferme est réalisée en maintenant appuyée une touche de la commande (11) pendant un moment relativement long.

**31.** Système comme revendiqué dans la revendication 29, dans lequel le système est conçu de telle façon que la sélection ferme est réalisée en appuyant deux fois sur la commande (11) dans un bref laps de temps.

**32.** Système comme revendiqué dans l'une quelconque des revendications 23 à 28, comprenant un écran tactile (62) conçu pour afficher les images candidates pour la sélection.

**33.** Système comme revendiqué dans l'une quelconque des revendications 23 à 32, dans lequel les images de référence précèdent une ou plusieurs images candidates dans le flux d'images.

**34.** Système comme revendiqué dans l'une quelconque des revendications 23 à 33, dans lequel le processeur est conçu pour que l'écran (9) affiche l'intervalle de temps pour chaque image candidate, par rapport à la référence initiale.

**35.** Système, selon l'une quelconque des revendications 23 à 34, dans lequel le processeur (5) est conçu pour permettre de régler l'intervalle de temps entre les images candidates.

**36.** Système selon la revendication 35, dans lequel la commande (11) inclut une ou plusieurs touches conçues pour être utilisées par l'utilisateur afin de régler l'intervalle de temps entre les images candidates.

37. Système comme revendiqué dans l'une quelconque des revendications 23 à 36, dans lequel la commande (11) comporte au moins deux touches configurées selon la même disposition que les images candidates affichées sur l'écran, chaque image candidate correspondant à une touche.

38. Système comme revendiqué dans l'une quelconque des revendications 23 à 37, dans lequel l'image de référence est re-sélectionnée un nombre de fois prédéterminé.

39. Système selon l'une quelconque des revendications 23 à 38, dans lequel le processeur (5) est conçu pour analyser l'intervalle de temps entre les images candidates ou la durée du flux d'images, et pour augmenter ou diminuer le nombre d'itérations exécutées par le procédé en conséquence.

40. Système comme revendiqué dans l'une quelconque des revendications 23 à 39, dans lequel le processeur (5) est conçu pour commander le moyen d'affichage (9) pour afficher le flux d'images en partant de l'image de départ.

41. Système comme revendiqué dans l'une quelconque des revendications 23 à 39, dans lequel le système comprend en outre une mémoire cache (7), la mémoire cache (7) pouvant être commandée par le processeur (5) et étant conçue pour télécharger une partie du flux d'images, localement vers le processeur (5).

42. Système comme revendiqué dans l'une quelconque des revendications 23 à 41, dans lequel le système est un enregistreur vidéo personnel, ledit enregistreur vidéo personnel incluant le processeur (5) et comportant une mémoire.

Figure 1

Figure 2

Search mode requested
Time = 0 in timestream —101

**Set initial conditions**
$C = 1$, $\quad T_{R1} = -5$,
$T_{R2} = 0$, $\quad T_{R3} = 0$,
$T_1 = -5$, $\quad Vol = 0$
$\delta t = 40$ —103

**Display montage of 9 images**
Establish value of $\delta t$ for current value of C
1st image time = $T_1$
2nd image time = $T_2 = T_1 + (1 \times \delta t)$
3rd image time = $T_3 = T_1 + (2 \times \delta t)$
4th image time = $T_4 = T_1 + (3 \times \delta t)$
etc.
9th image time = $T_9 = T_1 + (8 \times \delta t)$ —105

Await user input —107

Is input "back up"? — Does C = 1? — $T_1 = T_{R(C-1)}$ $C = C - 1$ —123
—117 —119

Resume playing video stream at Time = 0 —121

Is input "channel up"? —125 — $T_1 = T_1 - (6 \times \delta t)$ $T_{RC} = T_1$ —127

Is input "channel down"? —129 — $T_1 = T_1 + (6 \times \delta t)$ $T_{RC} = T_1$ —130

Is input "volume up"? —131 — $\delta t = 2 \times \delta t$, $Vol = Vol + 1$ If Vol = 2 then C = C -1 and Vol = 0 else —133

Is input "volume down"? —132 — $\delta t = \delta t \div 2$, $Vol = Vol - 1$ If Vol = -2 then C = C +1 and Vol = 0 else —134

Is input a double input of a number from 1 to 9? —135 — Let $\alpha$ = single instance of input. Resume playback at Time = $T_1 + ((\alpha - 1) \times \delta t)$ —136

Is input a single number from 1 to 9? —109

Let $\alpha$ = input Does C = 3? —111 — $T_1 = T_1 + ((\alpha - 1) \times \delta t)$ $C = C + 1$ $T_{RC} = T_1$ —113

Resume playback at Time = $T_1 + ((\alpha - 2) \times \delta t)$ —115

*FIG. 3*

| | | |
|---|---|---|
| time = -5 sec $T_1$ | time = 35 sec $T_2$ | time = 75 sec $T_3$ |
| time = 115 sec $T_4$ | time = 155 sec $T_5$ | time = 195 sec $T_6$ |
| time = 235 sec $T_7$ | time = 275 sec $T_8$ | time = 315 sec $T_9$ |

Time elapsed between first and last image = 320 secs

Gap between images $\delta t$ = 40 secs

Figure 4

| | | |
|---|---|---|
| time = 195 sec $T_1$ | time = 200 sec $T_2$ | time = 205 sec $T_3$ |
| time = 210 sec $T_4$ | time = 215 sec $T_5$ | time = 220 sec $T_6$ |
| time = 225 sec | time = 230 sec | time = 235 sec |

Time elapsed between first and last image = 40 secs

Gap between images $\delta t$ = 5 secs

Figure 5

22

Figure 6

| time =<br>-245 sec | time =<br>-205 sec | time =<br>-165 sec |
|---|---|---|
| $T_1$ | $T_2$ | $T_3$ |
| time =<br>-125 sec | time =<br>-85 sec | time =<br>-45 sec |
| $T_4$ | $T_5$ | $T_6$ |
| time =<br>-5 sec | time =<br>35 sec | time =<br>75 sec |
| $T_7$ | $T_8$ | $T_9$ |

Time elapsed between first
and last image = 320 secs

Gap between images
δt = 40 secs

Figure 7

| time =<br>235 sec | time =<br>275 sec | time =<br>315 sec |
|---|---|---|
| $T_1$ | $T_2$ | $T_3$ |
| time =<br>355 sec | time =<br>395 sec | time =<br>435 sec |
| $T_4$ | $T_5$ | $T_6$ |
| time =<br>475 sec | time =<br>515 sec | time =<br>555 sec |
| $T_7$ | $T_8$ | $T_9$ |

Time elapsed between first
and last image = 320 secs

Gap between images
δt = 40 secs

Figure 8

60

64

61

62

63

69

OPERATING SYTEM 65

VIDEO 66 PLAYER PROGRAM

SEARCH 67 TOOL PLUF-IN

WORKING DATA 68

INTERNET

70

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0999504 A
- US 2003067479 A

- EP 0619550 A2

**Non-patent literature cited in the description**

- **HONGJIANG ZHANG et al.** CONTENT-BASED VIDEO BROWSING TOOLS. *PROCEEDINGS OF THE SPIE,* vol. 2417, 389-398